(19) **Europäisches Patentamt**

**European Patent Office**

**Office européen des brevets**

(11) **EP 0 915 003 B1**

(12) **EUROPÄISCHE PATENTSCHRIFT**

(45) Veröffentlichungstag und Bekanntmachung des Hinweises auf die Patenterteilung:
**27.02.2002 Patentblatt 2002/09**

(51) Int Cl.⁷: **B62D 1/20**, F16D 3/26, B62D 3/02

(21) Anmeldenummer: **98811100.1**

(22) Anmeldetag: **03.11.1998**

(54) **Fahrzeuglenkung**

Vehicle steering device

Direction pour véhicule

(84) Benannte Vertragsstaaten:
**AT CH DE ES FR GB IT LI SE**

(30) Priorität: **07.11.1997 EP 97810839**

(43) Veröffentlichungstag der Anmeldung:
**12.05.1999 Patentblatt 1999/19**

(73) Patentinhaber: **Wandfluh Automotive AG**
**3716 Kandergrund (CH)**

(72) Erfinder: **Bernhard, Ernst**
**2558 Aegerten (CH)**

(74) Vertreter: **Roshardt, Werner Alfred, Dipl.-Phys.**
**Keller & Partner Patentanwälte AG**
**Schmiedenplatz 5 Postfach**
**3000 Bern 7 (CH)**

(56) Entgegenhaltungen:
**EP-A- 0 008 305** **EP-A- 0 737 612**

**Beschreibung**

**Technisches Gebiet**

Die vorliegende Erfindung betrifft eine Fahrzeuglenkung mit variablem Übersetzungsverhältnis und ein Lenkgetriebe für eine solche Lenkung, nach den Ansprüchen 1 und 4.

**Stand der Technik**

Die Erfindung befasst sich mit einer Fahrzeuglenkung (Vorrichtung zum Lenken eines Fahrzeuges) des Typs, welcher es gestattet, das Übersetzungsverhältnis für die Übersetzung zwischen der Steuerbewegung einer Lenkungsbetätigungsvorrichtung und der gesteuerten Bewegung der mittels der Lenkung gelenkten Fahrzeugkomponenten zu variieren, wobei die Variabilität des Übersetzungsverhältnisses im wesentlichen durch ein Lenkgetriebe erzeugt wird. Ein Lenkgetriebe dieses Typs umfasst ein Antriebsglied und ein Abtriebsglied und übersetzt eine Bewegung des Antriebsgliedes in eine Bewegung des Abtriebsgliedes, wobei das Übersetzungsverhältnis variabel ist. Das Antriebsglied des Lenkgetriebes ist mit der Lenkungsbetätigungsvorrichtung gekoppelt, wobei ein allfällig vorhandenes Übersetzungsverhältnis zwischen der Bewegung der Lenkungsbetätigungsvorrichtung und derjenigen des Antriebsgliedes im wesentlichen konstant ist. Das Abtriebsglied des Lenkgetriebes ist mit den gelenkten Fahrzeugkomponenten gekoppelt, wobei wiederum ein allfällig vorhandenes Übersetzungsverhältnis zwischen der Bewegung des Abtriebsgliedes und derjenigen der gelenkten Fahrzeugkamponenten im wesentlichen konstant ist.

Im nachfolgenden ist unter einem Fahrzeug im allgemeinen irgend ein Fahrzeug (Landfahrzeug, Wasserfahrzeug, Luftfahrzeug, Raumfahrzeug) zu verstehen, obwohl zur Veranschaulichung sowohl der erfindungsgemässen als auch der bekannten Lenkungen und Lenkgetriebe stets das am weitesten verbreitete Beispiel in Form eines Personenkraftwagens (PKW) herangezogen wird. Bei einem Landfahrzeug besteht die Lenkungsbetätigungsvorrichtung üblicherweise aus einem Lenkrad und die gelenkten Fahrzeugkomponenten werden durch Fahrzeugräder gebildet. Bei einem Boot können Lenkungsbetätigungsvorrichtung und gelenkte Fahrzeugkomponenten aus Steuerrad bzw. Steuerruder bestehen, bei einem Flugzeug aus Steuerknüppel bzw. Seiten-und/oder Querleitwerk.

Bei der Anwendung in einer Lenkung für einen Personenkraftwagen (PKW) ist das Lenkgetriebeantriebsglied - üblicherweise in Form einer Lenkgetriebeeingangswelle - mit einem Lenkrad gekoppelt. Das Lenkgetriebeabtriebsglied ist über ein Lenkgestänge mit den gelenkten Fahrzeugrädern, meistens den Vorderrädern, gekoppelt. Das Lenkgestänge umfasst üblicherweise Spurstangen, Lenkschubstangen, Lenkhebel und/oder weitere Elemente. Im Falle einer Zahnstangenlenkung umfasst das Lenkgetriebe einen Ritzel-Zahnstangen-Mechanismus, wobei die das Lenkgetriebeabtriebsglied bildende Zahnstange mit dem Lenkgestänge verbunden ist. Im Falle einer Schneckenrollenlenkung und/oder einer Kugelmutter-Hydrolenkung wird das Lenkgetriebeabtriebsglied durch eine sogenannte Lenkrollenwelle gebildet, an welcher ein Lenkstockhebel befestigt ist, der das Lenkgestänge betätigt.

Bei einem Landfahrzeug mit Lenkrad und gelenkten Rädern werde die Winkelstellung des Lenkrades mit $\alpha$ und diejenige der gelenkten Räder mit $\beta$ bezeichnet. Dann wird durch eine Fahrzeuglenkung insgesamt eine Drehbewegung des Lenkrades um einen Drehwinkel $d\alpha$ in eine Drehbewegung der gelenkten Räder um einen Lenkwinkel $d\beta$ umgesetzt. Bei den meisten gebräuchlichen Lenkungen ist das Übersetzungsverhältnis zwischen der Drehbewegung des Lenkrades und derjenigen der gelenkten Räder über den gesamten Lenkungsbereich von einem Anschlag der Lenkung zum anderen Anschlag im wesentlichen konstant, d.h. es besteht eine lineare Beziehung zwischen dem Drehwinkel $d\alpha$ des Lenkrades und dem Lenkwinkel $d\beta$ der gelenkten Räder.

Im Hinblick auf die Bedienung des Fahrzeuges ist jedoch an sich ein variables Übersetzungsverhältnis zwischen der Drehbewegung des Lenkrades und der Drehbewegung der gelenkten Räder erwünscht. Dabei sind die Anforderungen an die Charakteristik dieses Übersetzungsverhältnisses je nach Fahrzeugtyp und/oder Fahrsituation z.T. sehr unterschiedlich. So ist z.B. für eine sichere Kontrolle des Fahrzeuges in einem Hochgeschwindigkeitsbereich, wo die Lenkung meistens in einem engen Eereich um die Geradeausstellung herum betrieben wird, ein grosses Übersetzungsverhältnis $d\alpha/d\beta$ (Verhältnis zwischen Drehwinkel $d\alpha$ des Lenkrades und Lenkwinkel $d\beta$ der gelenkten Räder) wünschenswert, damit nicht kleine Lenkradbewegungen bereits zu einem abrupten Richtungswechsel führen. Beim Manövrieren des Fahrzeuges mit kleiner Geschwindigkeit, insbesondere zum Parkieren, ist jedoch ein kleines Übersetzungsverhältnis $d\alpha/d\beta$ wünschenswert, damit die gelenkten Räder rasch von einem Lenkanschlag bis zum anderen Lenkanschlag gedreht werden können.

Wenn das Übersetzungsverhältnis $d\alpha/d\beta$ (Verhältnis zwischen Drehwinkel $d\alpha$ des Lenkrades und Lenkwinkel $d\beta$ der gelenkten Räder) von einer neutralen Lenkungstellung für die Geradeausfahrt bei einer Lenkraddrehung nach rechts oder links bis zum Anschlag abnimmt, spricht man von einer progressiven Lenkung. Bei einer progressiven Lenkung (d.h. einer Lenkung mit einer progressiven Charakteristik des Übersetzungsverhältnisses) bewirkt somit eine Lenkraddrehung um ein bestimmtes Winkelinkrement $d\alpha$ bei ausgelenkten Rädern eine grössere Drehung $d\beta$ der gelenkten Räder als bei gerade gestellten Rädern. Eine progressive Lenkung erweist sich insbesondere für Rennwagen als vorteilhaft, um einerseits ein präzises Lenken bei Geradeausfahrten mit hohen Geschwindigkeiten zu ermöglichen und andrerseits im Falle eines Schleuderns des Wagens mit raschen Lenkwinkelverstellungen der gelenkten Rädern reagieren zu können, um den Wagen aus dem Schleudern wieder aufzufangen.

Umgekehrt spricht man von einer degressiven Lenkung (d.h. einer Lenkung mit einer degressiven Charakteristik des Übersetzungsverhältnisses), wenn das Übersetzungsverhältnis $d\alpha/d\beta$ (Verhältnis zwischen Drehwinkel $d\alpha$ des Lenkrades und Lenkwinkel $d\beta$ der gelenkten Räder) von einer neutralen Lenkungstellung für die Geradeausfahrt bei einer Lenkraddrehung nach rechts oder links bis zum Anschlag zunimmt. Im Falle einer degressiven Lenkung bewirkt eine Lenkraddrehung um ein bestimmtes Winkelinkrement $d\alpha$ bei ausgelenkten Rädern eine kleinere Drehung $d\beta$ der gelenkten Räder als bei gerade gestellten Rädern. Eine degressive Lenkung kann z.B. verwendet werden, wenn ein Verzicht auf eine Servo- oder Hilfskraftunterstützung der Lenkung gewünscht ist und trotzdem die Lenkung von schweren Fahrzeugen bei kleinen Geschwindigkeiten ermöglicht werden soll. In diesem Falle erleichtert eine degressive Lenkung das Manövrieren z.B. beim Einparken bei kleinen Geschwindigkeiten, indem sie bei stark ausgelenkten Rädern leichtgängiger ist als im Geradeausfahrbereich.

Eine Fahrzeuglenkung mit variablem Übersetzungsverhältnis wird z.B. von der Firma "ZF Friedrichshafen AG" aus Deutschland in Form einer Zahnstangenlenkung mit degressiver oder progressiver Charakteristik angeboten. Die Degressivität oder die Progressivität dieser Lenkung beruht auf einer Zahnstange, deren Verzahnung mit unterschiedlichem Modul und Eingriffswinkel gefertigt ist. Der Unterschied zwischen der grössten und der kleinsten Übersetzung der Zahnstange beträgt maximal ungefähr 30%.

Aus DE 195 19 588 A1 (Honda) ist ein Lenkgetriebe mit einer progressiven Charakteristik bekannt. Die Variabilität des Übersetzungsverhältnisses beruht bei diesem Lenkgetriebe darauf, dass die Ausgangswelle des Lenkgetriebes bezüglich dessen Eingangswelle zwar parallel verlaufend, aber versetzt (d.h. exzentrisch) angeordnet ist. Zur Kupplung der Eingangswelle mit der Ausgangswelle ist ein Zwischenelement zwischen den beiden Wellen angeordnet, das im wesentlichen die Funktion einer Schubkurbel (Schubgelenk kombiniert mit Drehgelenk) hat und das Drehmoment von der Eingangswelle bzw. einer mit der Eingangswelle drehfest verbundenen Verlängerung auf die Ausgangswelle überträgt. Ein wesentliches Problem bei einem Lenkgetriebe dieser Art besteht darin, dass es ohne enormen konstruktiven Aufwand nicht spielfrei herzustellen ist.

In der Druckschrift EP 0 008 305 A (BMW), die den nächsten Stand der Technik für die unabhängigen Ansprüche 1 und 4 darstellt, wird ein auf einem Kardangelenk basierendes Lenkgetriebe beschrieben, das zur Erreichung eines veränderlichen Übersetzungsverhältnisses den Kardanfehler des Kardangelenks ausnutzt. Aufgrund des auf ungefähr 40 Grad begrenzten Beugungswinkel des Kardangelenks liegt die maximal erreichbare Variabilität des Übersetzungsverhältnisses in der Grössenordnung von 30%.

Aus der EP 0 737 612 A (Caterpillar) ist ein Steuergetriebe zur Steuerung eines Steuerventils beschrieben, das seinerseits einen oder mehrere hydraulische Zylinder zur Lenkung eines Gelenkfahrzeuges steuert. Das Steuergetriebe umfasst eine Teleskopwelle, an deren beiden Längsenden je ein Kardangelenk derart angeordnet ist, dass sich die Kardanfehler der beiden Kardangelenke nicht aufheben, sondern verstärken. Ein Steuergetriebe dieser Art eignet sich aufgrund des aus den beiden Kardangelenken aufsummierten Spiels schlecht als eigentliches Lenkgetriebe, da es nicht spielfrei eingestellt werden kann.

Gegenstand der Patentanmeldung US 4 921 470 von Seiko ist eine für eine Fahrzeuglenkung verwendbare gelenkige Kupplung zur drehfesten Verbindung von zwei Wellen. Die Kupplung von Seiko beruht auf einem Kugelgelenk. Ein gabelförmiges Ende einer Antriebswelle greift in Nuten ein, die in einem im wesentlichen kugelförmigen Zwischenglied ausgebildet sind. Dadurch ist die Antriebswelle nach Art eines Schwenkgelenks schwenkbar mit dem Zwischenglied verbunden. Auf ähnliche Art greift ein gabelförmiges Ende einer Abtriebswelle in andere Nuten ein die im Zwischenglied ausgebildet sind, so dass auch die Abtriebswelle nach Art eines Schwenkgelenks schwenkbar mit dem Zwischenglied verbunden ist. Im gabelförmigen Ende der Abtriebswelle ist eine Ausnehmung ausgebildet, die zur Durchführung der Gabelenden der Antriebswelle bei der Montage der Kupplung vorgesehen ist.

In der Druckschrift US 5 358 445 von General Signal Corporation wird eine schwenkbare Kupplungsvorrichtung zur drehfesten (d.h. drehmomentübertragenden) Kupplung von zwei Wellen beschrieben. Das kupplungsseitige Ende der einen Welle ist nach Art einer Gelenkkugel ausgebildet, wobei diese "Gelenkkugel" - im Unterschied zur exakten Kugelform bei einem üblichen Kugelgelenk - T-förmig ausgebildet ist, um Drehmomente übertragen zu können. Das kupplungsseitige Ende der anderen Welle ist nach Art einer der T-förmigen "Gelenkkugel" entsprechenden Gelenkpfanne ausgebildet.

Die amerikanische Patentschrift US 4 899 611 von Fiat aus dem Jahre 1990 hat ein Kardangelenk für eine Fahrzeuglenkung zum Gegenstand. Durch das Kardangelenk wird ein Lenkritzel gelenkig mit einer Lenkwelle verbunden. Das Kardangelenk ist mit einem Referenzanschlag versehen. Bei der Montage der Lenkung wird das Lenkritzel soweit in das Kardangelenk eingeführt, bis sein Schaft gegen diesen Referenzanschlag stösst. Dadurch wird gewährleistet, dass das Lenkritzel korrekt im Kardangelenk positioniert ist.

Die Patentschrift US 5 340 137 von Carraro S.p.A. betrifft eine hohle Lenkwelle mit einem Träger, der gelenkig mit einer Spindel verbunden ist. Im Innenraum der Lenkwelle ist eine Antriebswelle mit einem Antriebsglied und einem Abtriebsglied angeordnet, die mittels eines Kardangelenks miteinander verbunden sind.

Die Druckschrift US 5 836 211 der IMO Industries befasst sich mit einer knickbaren Lenksäule, die insbesondere zur Verwendung für eine Schiffslenkung geeignet ist. Der Knickmechanismus beruht auf einem Schildzapfenlager.

Des weiteren sind Lenkgetriebe mit variablem Übersetzungsverhältnis bekannt, bei denen die Variabilität des Übersetzungsverhältnisses mittels der Verwendung von elliptischen Zahnrädern verwirklicht wird.

Sämtliche der bisher bekannten Lenkgetriebe und/oder Lenkungen mit variablem Übersetzungsverhältnis weisen jedoch im Vergleich zu üblichen Lenkgetrieben mit im wesentlichen konstantem Übersetzungsverhältnis systemspezifische Nachteile auf, die einer weitverbreiteten Verwendung der ersteren bisher hindernd im Wege standen.

Aufgrund des begrenzten minimalen Übersetzungsverhältnisses erfordern die meisten bekannten Lenkgetriebe mit variablem Übersetzungsverhältnis die Anordnung eines zusätzlichen Untersetzungsgetriebes, um das für Fahrzeuglenkungen üblicherweise erforderliche Übersetzungsverhältnis $d\alpha/d\beta$ (Verhältnis zwischen Drehwinkel $d\alpha$ des Lenkrades und Lenkwinkel $d\beta$ der gelenkten Räder) zu erreichen. Dies verursacht Probleme im Hinblick auf die erreichbare mechanische Steifigkeit der kraftübertragenden Elemente und im Hinblick auf die Einsteilbarkeit des Spiels der Lenkungen. Zudem sind sowohl für die Herstellung von elliptischen Zahnrädern als auch die Herstellung von Zahnstangen mit variablem Modul und Eingriffswinkel spezielle und teure Werkzeuganordnungen nötig, um die erforderliche Genauigkeit bei der Fertigung zu erreichen.

## Darstellung der Erfindung

Aufgabe der vorliegenden Erfindung ist es, eine Lenkung mit variablem Übersetzungsverhältnis bereitzustellen, die über den gesamten Lenkbereich im wesentlich spielfrei einstellbar ist, eine einfache Konstruktion aufweist und die Erreichung eines für Fahrzeuglenkungen geeigneten Übersetzungsverhältnisses ermöglicht.

Die Lösung der Aufgabe ist Gegenstand der unabhängigen Patentansprüche 1 und 4.

Gemäss der Erfindung hat eine Fahrzeuglenkung mit variablem Übersetzungsverhältnis ein Lenkgetriebe, das ein um eine erste Drehachse drehbares Antriebsglied aufweist, welches über ein Zwischenglied mit einem um eine zweite Drehachse drehbaren Abtriebsglied gekuppelt ist, wobei das Antriebsglied um eine dritte Drehachse schwenkbar am Zwischenglied und dieses um eine vierte Drehachse schwenkbar am Abtriebsglied angelenkt ist. Das Antriebsglied, das Zwischenglied, das Abtriebsglied und die vier Drehachsen sind derart angeordnet, dass sich die vier Drehachsen in einem einzigen Punkt schneiden und der zwischen der ersten Drehachse und der vierten Drehachse eingeschlossene minimale Winkel in einem Bereich von 0.1 Grad bis 40 Grad liegt.

Ein erfindungsgemässes Lenkgetriebe für eine Fahrzeuglenkung mit variablem Übersetzungsverhältnis hat ein um eine erste Drehachse drehbares Antriebsglied, das über ein Zwischenglied mit einem um eine zweite Drehachse drehbaren Abtriebsglied gekuppelt ist, wobei das Antriebsglied um eine dritte Drehachse schwenkbar am Zwischenglied und dieses um eine vierte Drehachse schwenkbar am Abtriebsglied angelenkt ist. Das Antriebsglied, das Zwischenglied, das Abtriebsglied und die vier Drehachsen sind derart anzuordnen, dass sich die vier Drehachsen in einem einzigen Punkt schneiden und der zwischen der ersten Drehachse und der vierten Drehachse eingeschlossene minimale Winkel in einem Bereich von 0.1 Grad bis 40 Grad liegt.

Unter dem zwischen zwei Achser (bzw. Drehachsen) eingeschlossenen Winkel wird. wie allgemein üblich, der zwischen null und neunzig Grad messende Winkel zwischen zwei sich in einem Punkt schneidenden geradlinigen Achsen (bzw. Drehachsen) verstanden.

Bei einem erfindungsgemässen Lenkgetriebe variiert das Übersetzungsverhaltnis zwischen der Drehbewegung des Antriebsgliedes und der zugeordneten Drehbewegung des Abtriebsgliedes (ähnlich wie bei einem Kardangelenk) in Funktion der Winkelstellung des Antriebsgliedes. Je nach Winkellage, unter welcher das Lenkgetriebe in Bezug auf die neutrale Geradeausstellung der Lenkung in die Lenkung eingebaut ist, wird mittels des erfindungsgemässen Lenkgetriebes eine progressive oder eine degressive Lenkung erreicht. Das Übersetzungsverhältnis wird im wesentlichen durch die Winkellage des Getriebes und durch den zwischen der ersten Drehachse und der vierten Drehachse eingeschlossenen Winkel bestimmt, welcher selbst wiederum in Funktion der Winkellage des Getriebes variiert. Gemäss der Erfindung sind das Antriebsglied, das Zwischenglied, das Abtriebsglied und die vier Drehachsen derart anzuordnen, dass bei der Betätigung des Lenkgetriebes über den ganzen nutzbaren Lenkbereich der minimale Wert dieses zwischen der ersten und der vierten Drehachse eingeschlossenen Winkels zwischen 0.1 Grad und 40 Grad liegt. Vorzugsweise ist die Anordnung derart, dass dieser Winkel zwischen 30 Grad und 0.1 Grad liegt. Insbesondere wird eine Anordnung bevorzugt, bei der dieser Winkel ungefähr 5 Grad beträgt. Dadurch wird ein im Vergleich zu bisher bekannten Lenkgetrieben wesentlich kleineres minimales Übersetzungsverhältnis ermöglicht, so dass auf die Anordnung eines zusätzlichen Untersetzungsgetriebes für eine Fahrzeuglenkung verzichtet werden kann.

Das erfindungsgemässe Lenkgetriebe besteht im wesentlichen bloss aus den drei Teilen Antriebsglied, Zwischenglied und Abtriebsglied sowie aus ersten Gelenkmitteln zur schwenkbaren Anlenkung des Antriebsgliedes am Zwischenglied und aus zweiten Gelenkmitteln zur schwenkbaren Anlenkung des Zwischengliedes am Abtriebsglied. Das erfindungsgemässe Lenkgetriebe weist somit eine äusserst einfache Konstruktion auf. Sämtliche für das erfindungsgemässe Lenkgetriebe erforderlichen Gelenkmittel können einstellbare Lager. z.B. Kegelrollenlager, umfassen, damit das erfindungsgemässe Lenkgetriebe über den gesamten Lenkbereich im wesentlichen spielfrei einstellbar ist.

Bei einer bevorzugten Ausführungsform der erfindungsgemässen Lenkung sind das Antriebsglied und das Abtriebsglied bezüglich einander derart angeordnet, dass der zwischen der ersten Drehachse und der zweiten Drehachse eingeschlossene Winkel in einem Bereich zwischen 50 Grad und 89.9 Grad liegt. Vorzugsweise ist die Anordnung derart, dass dieser Winkel zwischen 60 Grad und 89.9 Grad liegt. Insbesondere wird eine Anordnung bevorzugt, bei der dieser Winkel ungefähr 70 Grad beträgt.

Eine weitere bevorzugte Ausführungsform der erfindungsgemässen Lenkung umfasst zur Betätigung der Lenkung ein Lenkrad, welches zur Begrenzung der Drehbewegung des Lenkrades mit Drehwinkel-Begrenzungsmitteln versehen ist. Die Drehwinkel-Begrenzungsmittel können z.B. einen fest am Lenkrad angebrachten Nocken umfassen welcher mit einem an der Lenkradhalterung angebrachten Nockenanschlag zur Begrenzung der Drehbewegung nach rechts und nach links zusammenwirkt. Diese Ausführungsform der Erfindung erweist sich insbesondere bei der Anwendung in einer Servolenkung (Hilfskraftlenkung) als vorteilhaft. Bei herkömmlichen Servolenkungen wird einerseits der maximale Lenkwinkel durch den Anschlag der gelenkten Räder begrenzt, andrerseits wird typischerweise ein Hydraulikdrehschieber zur Steuerung des Servoantriebes durch die lenkradseitig am Lenkgetriebe angeordnete Getriebeeingangswelle gesteuert. Dadurch besteht die Gefahr einer Überbelastung der Hydraulikeinrichtung der Servolenkung, wenn z.B. beim Parkieren das Lenkrad weiter gedreht wird, wenn die Räder sich bereits in ihrer Position am Anschlag befinden. Durch die Möglichkeit der Begrenzung des Drehwinkels am Lenkrad kann bei der erfindungsgemässen Lenkung diese Gefahr einer Überbelastung der Servovorrichtung verhindert werden. Wie bereits die herkömmlichen PKW-Servolenkungen ist auch eine erfindungsgemässe PKW-Servolenkung bei einem Servoausfall immer noch von Hand betätigbar.

Eine weitere bevorzugte Ausführungsform des erfindungsgemässen Lenkgetriebes zeichnet sich dadurch aus, dass das Zwischenglied bezüglich des Abtriebsgliedes derart angeordnet ist, dass die vierte Drehachse bezüglich der zweiten Drehachse einen Winkel im Bereich von 25 Grad bis 85 Grad, vorzugsweise einen solchen zwischen 70 Grad und 80 Grad, einschliesst. Insbesondere wird eine Anordnung derart bevorzugt, dass dieser Winkel ungefähr 75 Grad beträgt. Bei dieser Ausführungsform des erfindungsgemässen Lenkgetriebes gibt es einen Bereich von Winkelstellungen (Phasen) des Getriebes, bei der eine Drehbewegung des Antriebsgliedes um eimen Halbkreiswinkel (mit der Phase als Zentrum) mit einer Drehbewegung des Abtriebsgliedes um einen Winkel gekoppelt ist, der kleiner ist als ein Halbkreiswinkel. Dieser Bereich wird als Langphasenbereich des Antriebsgliedes bzw. Kurzphasenbereich des Abtriebsgliedes definiert. Die Drehbewegung des Antriebsgliedes um den anderen Halbkreiswinkel ist dann mit einer Drehbewegung des Abtriebsgliedes um einen Winkel gekoppelt, der entsprechend grösser ist als ein Halbkreiswinkel, da natürlich eine Drehbewegung des Antriebsgliedes um einen Vollkreis nach wie vor mit einer Drehbewegung des Abtriebsgliedes um einen Vollkreis gekoppelt ist. Bei der Anwendung eines Lenkgetriebes gemäss diese Ausführungsform in einer PKW-Lenkung wird das Lenkgetriebe vorteilhafterweise derart angeordnet, dass in Geradeausstellung der gelenkten Räder das Antriebsglied in der Mitte seines Langphasenbereichs und das Abtriebsglied in der Mitte seines Kurzphasenbereichs liegt. Dadurch wird erreicht, dass bei einem vorgegebenen Lenkwinkelbereich, innerhalb dessen Grenzen die Winkelstellung $\beta$ der gelenkten Räder variiert werden kann, der nutzbare Drehwinkelbereich, innerhalb dessen Grenzen die Winkelstellung $\alpha$ des Lenkrades variiert werden kann, maximal wird.

Vorzugsweise umfasst ein erfindungsgemässes Lenkgetriebe der oben beschriebenen Art Mittel zur wahlweisen Einstellung des zwischen der vierten Drehachse und der zweiten Drehachse (eingeschlossenen Winkels.

Bei einer weiteren Variante des erfindungsgemässen Lenkgetriebes ist das Antriebsglied bezüglich des Zwischengliedes derart angeordnet, dass die erste Drehachse bezüglich der dritten Drehachse einen Winkel im Bereich von 45 Grad bis 90 Grad einschliesst. Vorzugsweise beträgt dieser Winkel ungefähr 90 Grad.

Das Antriebsglied umfasst vorzugsweise eine gabelförmige Partie (mit ähnlicher Form wie eine Fahrradgabel) mit zwei Gabelholmen (Gabelscheiden), wobei die beiden Gabelholme je mit ersten Gelenkmitteln zur schwenkbaren Anlenkung der Gabelholme am Zwischenglied versehen sind. Die ersten Gelenkmittel können Achszapfen umfassen, die in den Gabelholmen einschraubbar sind und mit entsprechend am Zwischenstück angeordneten Lagerbuchsen und Kegelrollenlagern zusammenwirken. Mit den schraubbaren Achszapfen kann das Spiel der Kegelrollenlager eingestellt werden. Weiter können die Gabelholmen in Holmenlängsrichtung geschlitzt sein und mit einer quer durch den Schlitz hindurch angeordneten Bohrung versehen sein, in welche eine Fixierschraube einschraubbar ist, mit welcher die Achszapfen fixiert werden können.

Es können jedoch auch andere geeignete Drehgelenke verwendet werden, um das Antriebsglied um die dritte Drehachse schwenkbar am Zwischenglied anzulenken. So können z.B. die Buchsen am Antriebsglied und die Zapfen am Zwischenstück angeordnet sein.

Bei einer bevorzugten Ausführungsform des erfindungsgemässen Lenkgetriebes ist zur schwenkbaren Anlenkung des Zwischengliedes am Abtriebsglied ein Achszapfen einseitig fest an einem der beiden Teile eines Teilepaares, bestehend aus dem Zwischenglied und dem Abtriebsglied angeordnet und das andere der beiden Teile dieses Teilepaares mittels Lagermitteln drehbar auf dem Achszapfen gelagert. Mit anderen Worten ist entweder der Achszapfen einseitig fest am Abtriebsglied angeordnet und das Zwischenglied auf dem Achszapfen gelagert, oder der Achszapfen ist einseitig fest am Zwischenglied angeordnet und das Abtriebsglied auf dem Achszapfen gelagert. Der Achszapfen bildet also in Verbindung mit den Lagermitteln zweite Gelenkmittel zur um die vierte Drehachse schwenkbaren Verbindung zwischen dem Zwischenglied und dem Abtriebsglied. In diesem Fall wird die vierte Drehachse durch das Zentrum des Achszapfens definiert. Ein Vorteil der bloss einseitigen Befestigung des Achszapfens ist die grosse Bewegungsfreiheit des Lenkgetriebes: so erfordert zum Beispiel das dem fest am Abtriebsglied angeordneten Ende gegenüberliegende freie (fliegende) Ende des Achszapfens keine am Zwischenglied angebrachten Träger- und/oder Stützmittel. welche die Bewegung des Lenkgetriebes behindern könnten, dies im Gegensatz z.B. zu einer Konstruktion nach Art eines konventionellen Kreuzgelenkes.

Vorzugsweise weist der Achszapfen einen kegelförmigen Abschnitt auf, umfassen die Lagermittel ein oder mehrere Kegelrollenlager und ist das auf dem Achszapfen gelagerte Teil mittels axial verschieblichen Festhaltemitteln in seiner axiaien Position arretierbar, wobei mittels axialer Verschiebung der Festhaltemittel das Spiel der Lagermittel (und somit der zweiten Gelenkmittel) einstellbar ist. Die Festhaltemittel können eine mit einem Innengewinde versehene Stirnmutter umfassen, welche auf dem mit einem Aussengewinde versehenen freien Ende des Achszapfens aufschraubbar ist, um das auf dem Achszapfen gelagerte Tei, in seiner axialen Position zu fixieren.

Vorzugsweise weist das Abtriebsglied eine erste Schenkelpartie, eine zweite Schenkelpartie sowie eine die beiden Schenkelpartien verbindende Stegpartie auf, wobei der Achszapfen einseitig fest an der Stegpartie angeordnet ist und die beiden Schenkelpartien je mit dritten Gelenkmitteln zur um die zweite Drehachse drehbaren Lagerung des Abtriebsgliedes versehen sind. Diese dritten Gelenkmittel können fest am Abtriebsglied angebrachte Achszapfen umfassen, um mit Lagerbuchsen zusammenzuwirken. die z.B. an einem Trägergestänge eines Fahrzeuges angebracht sind. Vorzugsweise umfassen auch die dritten Gelenkmittel spielfrei einstellbare Kegelrollenlager.

Es können jedoch auch andere geeignete Drehgelenke verwendet werden, um das Zwischenglied um die vierte Drehachse schwenkbar am Abtriebsglied anzulenken. So kann beispielsweise das Abtriebsglied bloss einseitig an einem Trägergestänge eines Fahrzeuges angelenkt sein.

Es sind auch andere Formen für das Abtriebsglied möglich als die oben beschriebene Sichelform (d.h. zwei Schenkelpartien, die durch Stegpartie verbunden sind). So kann das Abtriebsglied z.B. auch winkelförmig ausgebildet sein, mit einer ersten Schenkelpartie und einer unter einem Winkel zu dieser an ihr angeordneten zweiten Schenkelpartie. Bei einem winkelförmigen Abtriebsglied kann ein Achszapfen zur schwenkbaren Anlenkung des Zwischengliedes am Abtriebsglied einseitig fest an der ersten Schenkelpartie angeordnet sein und die zweite Schenkelpartie mit Gelenkmitteln zur um die zweite Drehachse drehbaren Lagerung des Abtriebsgliedes versehen sein.

Eine weitere Variante der erfindungsgemässen Lenkung zeichnet sich dadurch aus, dass der zwischen der ersten Drehachse und der zweiten Drehachse eingestellte Winkel veränderlich einstellbar ist, indem die Anordnung des Antriebsgliedes bezüglich der Anordnung des Abtriebsgliedes variiert werden kann. Dadurch kann die Funktion verändert werden, nach welcher das Übersetzungsverhältnis in Abhängigkeit des Drehwinkels des Antriebsgliedes variiert. Vorzugsweise ist der zwischen der ersten Drehachse und der zweiten Drehachse eingestellte Winkel stufenlos einstellbar. Dadurch wird eine Einstellbarkeit der Progressivität der Lenkung erreicht. Bei einer weiteren bevorzugten Ausführungsform der Erfindung ist dieser Winkel in Funktion der Fahrgeschwindigkeit einstellbar, um eine geschwindigkeitsabhängige Progressivität der Lenkung zu erreichen.

Bei einer weiteren Variante der Erfindung schliesst die vierte Drehachse bezüglich der zweiten Drehachse einen von 90 Grad abweichenden Winkel ein, und der zwischen der ersten Drehachse und der zweiten Drehachse eingestellte Winkel ist veränderlich einstellbar. Bei dieser Variante der Erfindung kann der Winkel zwischen der ersten Drehachse und der zweiten Drehachse auf einen ersten Wert eingestellt werden, bei dem eine Drehbewegung des Antriebsgliedes stets mit einer gleichsinnigen Drehbewegung des Abtriebsgliedes gekoppelt ist, und auf einen zweiten Wert, bei dem in einem bestimmten Bereich von Drehwinkelstellungen des Antriebsgliedes eine Drehbewegung des Antriebsgliedes mit einer gegensinnigen Drehbewegung des Abtriebsgliedes gekoppelt ist. Diese Variante der Erfindung kann z.B. verwendet werden, um das Rückwärtsfahren eines Fahrzeuges zu erleichtern, indem beim Rückwärtsfahren eine gegensinnige Kopplung zwischen einer Drehbewegung am Lenkrad und der Lenkbewegung an den gelenkten Rädern eingestellt wird. Weiter ist eine Anwendung dieser Ausführungsform der Erfindung bei einer Allradlenkung denkbar, um z.B. bei kleinen Geschwindigkeiten eine gegensinnige Auslenkung von Vorder- und Hinterrädern und bei grossen Geschwindigkeiten eine gleichsinnige Auslenkung einstellen zu können.

Die nachfolgende detaillierte Beschreibung von bevorzugten Ausführungsbeispielen der vorliegenden Erfindung dient in Verbindung mit den beiliegenden Zeichnungen nur als Beispiel für ein besseres Verständnis der Erfindung und ist nicht als Einschränkung des Schutzbereichs der vorliegenden Erfindung, wie sie in den Patentansprüchen definiert wird, aufzufassen. Für den Fachmann sind aus der nachfolgenden Beschreibung in Verbindung mit den beiliegenden Zeichnungen und der Gesamtheit der Patentansprüche weitere vorteilhafte Ausführungsformen und Merkmalskombinationen ohne weiteres erkennbar, die jedoch immer noch innerhalb des Bereichs der vorliegenden Erfindung liegen.

**Kurze Beschreibung der Zeichnungen**

Die Zeichnungen stellen bevorzugte Ausführungsformen der vorliegenden Erfindung dar. Es zeigt:

Fig. 1      ein Lenkgetriebe gemäss einer ersten bevorzugten Ausführungsform der Erfindung in einer Seitenansicht;

Fig. 2      einen Querschnitt entlang der Linie B - B durch das Lenkgetriebe in Fig. 1:

Fig. 3      eine Explosionszeichnung des Lenkgetriebes in Fig. 1;

Fig. 4      eine schematische Darstellung einer Servo-Lenkung gemäss einer bevorzugten Ausführungsform der Erfindung;

Fig. 5      eine teilweise geschnittene Ansicht entlang der Linie A - A durch die Lenkung in Fig. 5;

Fig. 6      eine Diagrammdarstellung der Kinematik und des Übersetzungsverhältnisses des in den Figuren 1 bis 3 dargestellten Lenkgetriebes;

Fig. 7      ein Lenkgetriebe gemäss einer zweiten bevorzugten Ausführungsform der Erfindung in einer vereinfachten, teilweise geschnittenen Seitenansicht:

Fig. 8      einen Querschnitt entlang der Linie C - C durch das Lenkgetriebe in Fig. 7:

Fig. 9      ein Lenkgetriebe gemäss einer dritten bevorzugten Ausführungsform der Erfindung in einer vereinfachten, teilweise geschnittenen Seitenansicht.

Fig. 10     ein Lenkgetriebe gemäss einer vierten bevorzugten Ausführungsform der Erfindung in einer vereinfachten, teilweise geschnittenen Seitenansicht.

Grundsätzlich sind in den Figuren gleiche Teile mit gleichen Bezugszeichen versehen.

**Wege zur Ausführung der Erfindung**

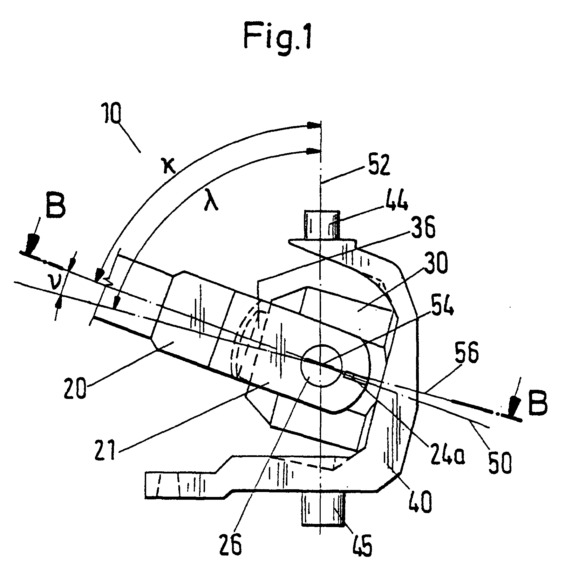

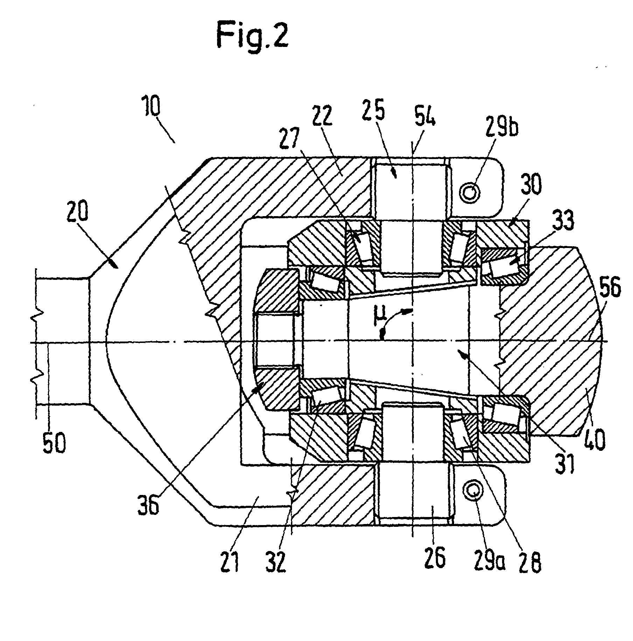

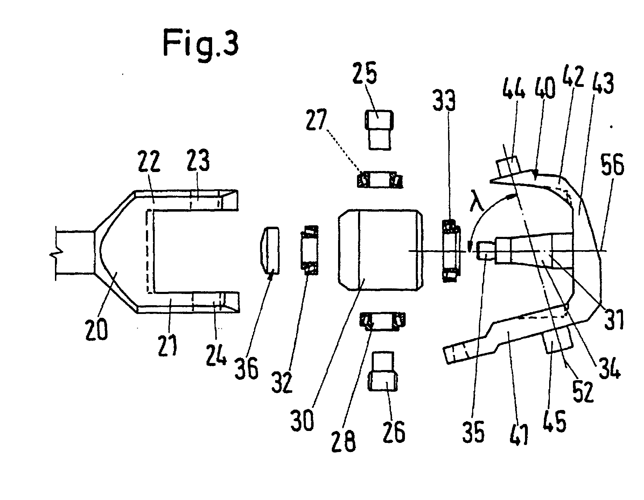

In Fig. 1 ist ein Ausführungsbeispiel eines Lenkgetriebes 10 einer Lenkung gemäss der Erfindung in einer Ansicht von der Seite dargestellt. In Fig. 2 ist das Lenkgetnebe 10 in einem Querschnitt entlang der geknickten Linie B - B (d.h. durch die erste Drehachse 50 und die vierte Drehachse 56 hindurch) dargestellt, und Fig. 3 zeigt eine Explosionszeichnung des Lenkgetriebes 10.

Das in den Figuren 1 bis 3 dargestellte Lenkgetriebe 10 hat ein um eine erste Drehachse 50 drehbares Antriebsglied 20, welches über ein Zwischenglied 30 mit einem um eine zweite Drehachse 52 drehbaren Abtriebsglied 40 gekuppelt ist. Das Antriebsglied 20 ist um eine dritte Drehachse 54 schwenkbar am Zwischenglied 30 angelenkt. Das Zwischenglied 30 ist seinerseits um eine vierte Drehachse 56 schwenkbar am Abtriebsglied 40 angelenkt.

Das Antriebsglied 20 weist eine gabelförmige Partie auf, die ähnlich einer Fahrradgabel zwei Gabelholmen (Gabelscheiden) 21, 22 hat. Die beiden Gabelholme 21, 22 weisen je eine Bohrung 23, 24 auf, die mit einem Innengewinde versehen ist. In diese Bohrungen 23, 24 ist je ein mit einem Aussengewinde versehener Achszapfen 25, 26 einschraubbar. Die Achszapfen 25,26 weisen je eine äussere, dickere Partie auf, die mit einem Aussengewinde versehen ist, um mit dem Innengewinde der Bohrungen 23, 24 zusammenzuwirken, und eine innere, schlankere Partie, welche an der Innenseite des Antriebsgliedes 20 über die Innenseite der Gabelhome 21, 22 vorstehen. Die inneren Partien der Achszapfen 25, 26 passen in erste Kegelrollenlager 27, 28, die in entsprechenden Bohrungen im Zwischenglied 30 angeordnet sind. Durch die Gelenkanordnung 23, 24, 25, 26, 27, 28 ist das Antriebsglied 20 über die beiden Gabelholme 21, 22 um die dritte Drehachse 54 schwenkbar am Zwischenglied 30 angelenkt.

Das Spiel der Kegelrollenlager 27, 28 und somit des um die Drehachse 54 schwenkbaren Drehgelenks kann mittels Schraubens der Achszapfen 25, 26 eingestellt werden. Zur Fixierung der Achszapfen 25. 26 in einer eingestellten Position sind die Gabelholme 21, 22 mit von den Bohrungen 23, 24 bis zu den Holmenspitzen verlaufenden Längsschlitzen 23a, 24a und je einer quer durch den Schlitz hindurch angeordneten Bohrung 29a, 29b versehen, in welche je eine Fixierschraube einschraubbar ist.

Das Abtriebsglied 40 weist eine erste Schenkelpartie 41, eine zweite Schenkel partie 42 sowie eine die beiden Schenkelpartien 41, 42 verbindende Stegpartie 43 auf. An den beiden Schenkelpartien 41, 42 ist je ein Achszapfen 44, 45 angeordnet. Diese Achszapfen 44, 45 passen in dritte Kegelrollenlager (nicht dargestellt), um das Abtriebsglied 40 um die zweite Drehachse 52 drehbar zu lagern. Diese dritten Kegelrollenlager können mit Lagerbuchsen zusammenzuwirken, die z.B. an einem Trägergestänge eines Fahrzeuges angebracht sind.

Ein weiterer Achszapfen 31 ist einseitig fest an der Stegpartie 43 des Abtriebsgliedes 40 angeordnet. Mittels Kegelrollenlagern 32, 33 ist das Zwischenglied 30 um die vierte Drehachse 56 drehbar auf dem Achszapfen 31 gelagert. Die bloss einseitige Befestigung des Achszapfens 31 am Abtriebsglied 40 weist den Vorteil auf, dass sie eine grosse Bewegungsfreiheit des Lenkgetriebes 10 gewährleistet, indem keine Träger- oder Stützmittel am freien (fliegenden) Ende des Achszapfens 31 die Bewegung des Lenkgetriebes 10 behindern.

Der Achszapfen 31 weist einen kegelförmigen Abschnitt 34 auf. Zur axialen Verschiebung und Fixierung des mittels der Kegelrollenlager 32, 33 auf dem Achszapfen 31 gelagerten Zwischengliedes 30 weist der Achszapfen 31 an seinem fliegenden Ende 35 ein Aussengewinde auf. Eine mit einer Bohrung mit Innengewinde versehene Stirnmutter 36 ist auf das fliegende Ende 35 des Achszapfens aufschraubbar, um das auf dem Achszapfen gelagerte Zwischenglied 30 in seiner axialen Position zu fixieren. Mit der Stirnmutter 36 kann das Spiel der Kegelrollenlager 32, 33 und somit des um die vierte Drehachse 56 schwenkbarer Drehgelenks eingestellt werden.

Wie in Fig. 1 zu erkennen ist, ist das Antriebsglied 20 bezüglich des Abtriebsgliedes 40 derart angeordnet, dass die erste Drehachse 50 bezüglich der zweiten Drehachse 52 einen von null Grad abweichenden Winkel κ von 70 Grad einschliesst. Dadurch wird ein in Funktion der Winkelstellung φ (Drehwinkel des Antriebsgliedes 20 um die erste Drehachse 50) variierendes Übersetzungsverhältnis dφ/dψ (Verhältnis zwischen Drehwinkel dφ des Antriebsgliedes 20 und Drehwinkel dψ des Abtriebsgliedes 40) erzeugt, wobei ψ die Winkelstellung des Abtriebsgliedes 40 (Drehwinkel des Abtriebsgliedes 40 um die zweite Drehachse 52) bezeichnet.

Wenn die einzelnen Bestandteile des Lenkgetriebes bezüglich einander derart angeordnet wären, dass sowohl der zwischen der ersten und der dritten Drehachse eingeschlossene Winkel als auch der zwischen der zweiten und der vierten Drehachse eingeschlossene Winkel im wesentlichen 90 Grad messen würden, so würde das Übersetzungsverhältnis zwischen der Drehbewegung des Antriebsgliedes und der zugeordneten Drehbewegung des Abtriebsgliedes nach Art eines üblichen Kardanantriebes (basierend auf einem gebräuchlichen Kreuzgelenk) variieren.

Bei der in den Figuren 1 bis 3 dargestellten Ausführungsform der Erfindung ist jedoch zwischen der zweiten Drehachse 52 und der vierten Drehachse 56 ein Winkel λ von 75 Grad eingeschlossen. Der Winkel μ zwischen der ersten Drehachse 50 sowie der dritten Drehachse 54 beträgt 90 Grad, was zur Folge hat, dass bei der Betätigung des Lenkgetriebes 10 über den ganzen nutzbaren Lenkbereich der zwischen der ersten Drehachse 50 und der vierten Drehachse 56 eingeschlossenen Winkel einen minimalen Wert ν erreicht, sobald die vierte Drehachse 56 in der durch die erste Drehachse 50 und die zweite Drehachse 52 aufgespannten Ebene liegt. Gleichzeitig erreicht auch das nachfolgend beschriebene Übersetzungsverhältnis dφ/dψ sein Maximum. Zudem besteht in diesem Fall eine einfache Beziehung zwischen dem zwischen der ersten Drehachse 50 und der zweiten Drehachse 52 eingeschlossene Winkel κ, dem zwischen der zweiten Drehachse 52 und der vierten Drehachse 56 eingeschlossenen Winkel λ und dem minimalen Wert ν des zwischen der ersten Drehachse 50 und der vierten Drehachse 56 eingeschlossenen Winkels, es gilt

$$\nu = \lambda - \kappa$$

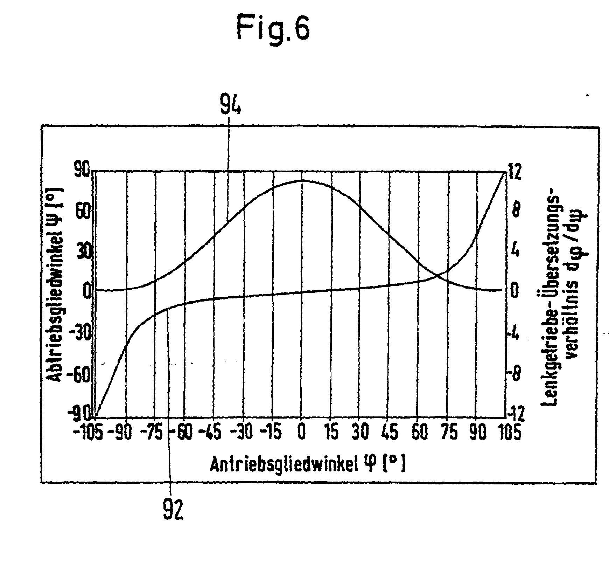

Das in den Figuren 1 bis 3 dargestellte Lenkgetriebe 10 ist derart in einer erfindungsgemässen Lenkung angeordnet, dass der zwischen der ersten Drehachse 50 und der zweiten Drehachse 52 eingeschlossene Winkel κ ungefähr 70 Grad beträgt. Die Kinematik 92 (d.h. die Abhängigkeit der Winkelstellung ψ des Abtriebsgliedes 40 von der Winkelstellung φ des Antriebsgliedes 20) und das Übersetzungsverhältnis dφ/dψ 94 (Verhältnis zwischen Drehwinkelinkrement dφ des Antriebsgliedes und Drehwinkelinkrement dψ des Abtriebsgliedes) des dargestellten Lenkgetriebes 10 sind als Diagramme 92, 94 in der Figur 6 dargestellt.

Wie aus Fig. 6 zu erkennen ist. nimmt das Übersetzungsverhältnis dφ/dψ 94 von der Nullage des Antriebsgliedwinkels φ (entspricht einer neutralen Lenkungstellung für die Geradeausfahrt) sowohl bei einer Drehung des Antriebsgliedes 20 nach rechts (zunehmender Antriebsgliedwinkel φ) als auch bei einer Drehung des Antriebsgliedes 20 nach links (abnehmender Antriebsgliedwinkel φ) ab. Dies bedeutet, dass die Lenkung eine progressive Charakteristik hat. Beim in den Figuren 1 bis 3 dargestellten Lenkgetriebe 10 nimmt dabei das Übersetzungsverhältnis dφ/dψ 94 von einem Maximalwert von 11 bei der Nullage von φ auf einen Minimalwert von 0.37 beim Anschlag des Lenkgetriebes 10 ab. Der Anschlag des Lenkgetriebes 10 wird sowohl bei Rechts- als auch bei Linksdrehung des Antriebsgliedes 20 um einen Drehwinkel dφ von ungefähr 104 Grad aus seiner Nullage erreicht. Das Abtriebsglied 40 wird dabei um einen Drehwinkel dψ von 90 Grad aus seiner Nullage gedreht. Der grosse nutzbare Drehwinkelbereich von -104 Grad bis +104 Grad ist eine Folge der Anordnung des Zwischengliedes 30 am Abtriebsglied 40 derart, dass der Winkel λ zwischen der zweiten Drehachse 52 und der vierten Drehachse 56 von 90 Grad abweicht.

Bei dem in den Figuren 1 bis 3 dargestellten Ausführungsbeispiel der Erfindung (d.h. ν = 5 Grad, κ = 70 Grad, λ = 75 Grad, μ = 90 Grad) gilt für die Kinematik (d.h. die Abhängigkeit der Winkelstellung ψ des Abtriebsgliedes 40 von der Winkelstellung φ des Antriebsgliedes 20) im wesentlichen die folgende Beziehung:

$$\upsilon(\omega) = 2 * a\tan\left(\frac{\cos(\omega)*\sin(\lambda) - \sqrt{\cos^2(\varphi)*\sin^2(\lambda) + \sin^2(\varphi)*\cos^2(\kappa)*\sin^2(\lambda) - \sin^2(\varphi)*\sin^2(\kappa)*\cos^2(\lambda)}}{-\sin(\omega)*\cos(\kappa)*\sin(\lambda) - \sin(\varphi)*\sin(\kappa)*\cos(\lambda)}\right)$$

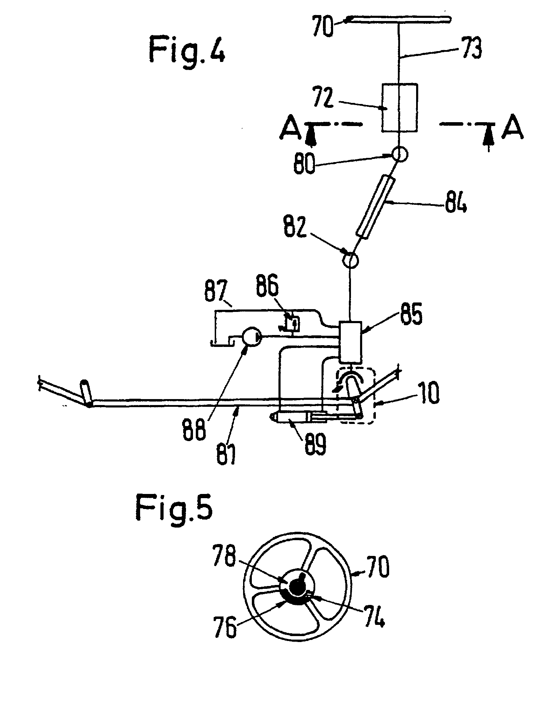

In Fig. 4 ist eine bevorzugte Ausführungsform einer erfindungsgemässer Lenkung schematisch dargestellt, die mit einer Einrichtung zur Servounterstützung der Lenkung versehen ist.

Ein Lenkrad 70 ist drehfest an einer Lenkradwelle 73 angebracht, welche drehbar in einer Lenkradhalterung 72 gelagert ist. Zur Begrenzung der Drehbewegung des Lenkrades ist die Lenkung mit Drehwinkel-Begrenzungsmitteln 74 versehen. Wie in Fig. 5 zu sehen ist, umfassen die Drehwinkel-Begrenzungsmittel 74 einen fest an der Lenkradwelle 73 angebrachten Nocken 78, welcher mit einem an der Lenkradhalterung 72 angebrachten Nockenanschlag 76 zusammenwirkt, um sowohl die Drehbewegung des Lenkrades 70 nach rechts als auch diejenige nach links zu begrenzen.

Die Lenkradwelle 73 ist über Kreuzgelenke 80, 82, einen sogenannten Crash-Absorber 84 und einen Hydraulik-Drehschieber 85 an das Lenkgetriebe 10 gekoppelt, welches über eine Spurstange 81 ein Lenkgestänge betätigt, um die lenkbaren Räder eines Fahrzeuges zu lenken. Über den Hydraulik-Drehschieber 85 wird eine Servoeinrichtung gesteuert, die im wesentlichen ein Druckbegrenzungsventil 86, einen Hydrauliktank 87, eine Hydraulikpumpe 88 und einen Arbeitszylinder 89 umfasst. Der Hydraulik-Drehschieber 85 ist antriebsseitig am Lenkgetriebe 10 angeordnet und der Arbeitszylinder 89 ist abtriebsseitig am Lenkgetriebe 10 angeordnet. Durch diese Anordnung wird in Verbindung mit den Drehwinkel-Begrenzungsmitteln 74 die Gefahr einer Überbelastung der Servoeinrichtung verhindert, die bei gebräuchlichen Servolenkungen insbesondere beim Manövrieren des Fahrzeuges beim Parkieren häufig vorhanden ist.

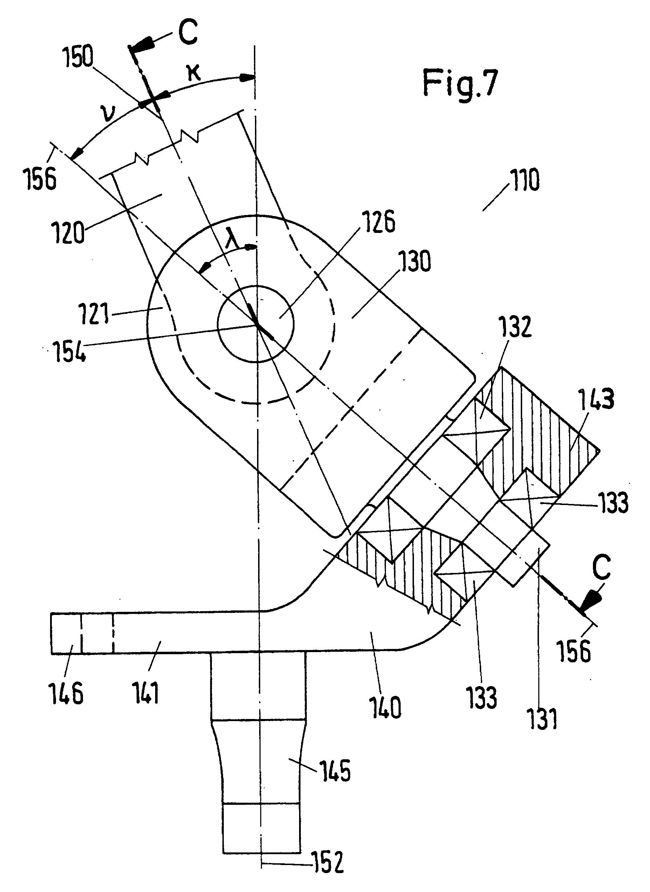

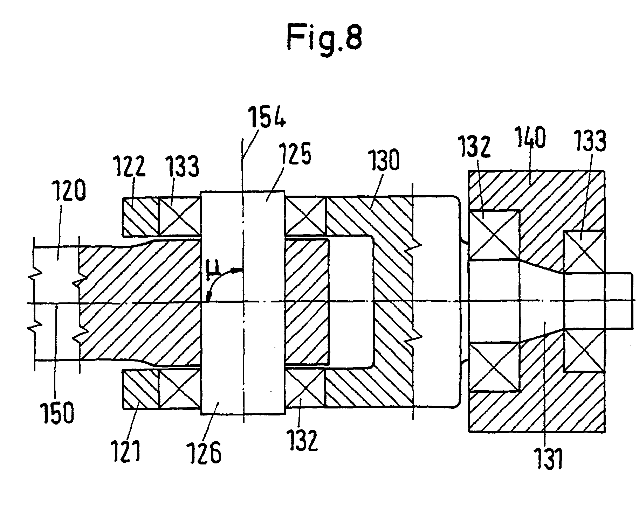

In Fig. 7 ist ein Lenkgetriebe 110 gemäss einer zweiten bevorzugten Ausführungsform der Erfindung in einer vereinfachten, teilweise geschnittenen Seitenansicht analog der Darstellung in Fig. 1 dargestellt. In Fig. 8 ist das in Fig. 7 dargestellte Lenkgetriebe 110 in einem Querschnitt entlang der geknickten Linie C - C (d.h. durch die erste Drehachse 150 und die vierte Drehachse 156 hindurch) analog der Darstellung in Fig. 2 dargestellt. Das in den Figuren 7 und 8 dargestellte Lenkgetriebe 110 stellt eine konstruktiv besonders einfache und kompakte Ausführungsform eines erfindungsgemässen Lenkgetriebes dar.

Das in den Figuren 7 und 8 dargestellte Lenkgetriebe 110 hat ein um eine erste Drehachse 150 drehbares Antriebsglied 120, welches über ein Zwischenglied 130 mit einem um eine zweite Drehachse 152 drehbaren Abtriebsglied 140 gekuppelt ist. Das Antriebsglied 120 ist um eine dritte Drehachse 154 schwenkbar am Zwischenglied 130 angelenkt. Das Zwischenglied 130 ist seinerseits um eine vierte Drehachse 156 schwenkbar am Abtriebsglied 140 angelenkt.

Das gelenkseitige Ende des länglichen Antriebsgliedes 120 weist zwei flache Aussenseiten auf, von denen je ein Achszapfen 125, 126 vorsteht. Das gelenkseitige Ende des länglichen Antriebsglieces 120 ist zwischen zwei plattenförmigen Fortsätzen 121, 122 des Zwischenstücks 130 angeordnet. Die Achszapfen 125, 126 sind in passenden Lagern 132, 133 aufgenommen, welche in entsprechenden Bohrungen in den plattenförmigen Fortsätzen 121. 122 des Zwischenstücks 130 angeordnet sind, um das Antriebsglied 120 um die dritte Drehachse 154 schwenkbar am Zwischenglied 130 anzulenken.

An seinem den plattenförmigen Fortsätzen 121, 122 gegenüberligenden Ende ist das Zwischenstück 130 mit einem vorstehenden Achszapfen 131 versehen, der in Lagern 132, 133, die in entsprechenden Lagerbuchsen am Abtriebsglied 140 angeordnet sind, aufgenommen wird. Dadurch wird das Zwischenglied 130 um die vierte Drehachse 156 schwenkbar am Abtriebsglied 140 angelenkt.

Das Abtriebsglied 140 ist winkelförmig ausgebildet und weist eine erste Schenkelpartie 141 und eine zweite Schenkelpartie 143 auf. In der zweiten Schenkelpartie 143 sind die oben erwähnten Lagerbuchsen und Lager 132, 133 angeordnet, welche mit dem Achszapfen 131 des Zwischengliedes 130 zusammenwirken. An der ersten Schenkelpartie 141 des Abtriebsgliedes 140 ist ein Achszapfen 145 angeordnet. Dieser Achszapfen 145 passt in Lager (nicht dargestellt), um das Abtriebsglied 140 um die zweite Drehachse 152 drehbar zu lagern, wobei diese Lager in entsprechenden Lagerbuchsen am Chassis eines Fahrzeuges angebracht sein können, welches mittels des Lenkgetriebes 110 gelenkt wird. Die erste Schenkelpartie141 weist eine vom Verbindungswinkel mit der zweiten Schenkelpartie 143 über die zweite Drehachse 152 hinaus reichende Verlängerung 146 auf, welche zur Betätigung des Lenkgestänges der das Lenkgetriebe 110 umfassenden Lenkung dient.

Wie in Fig. 7 zu erkennen ist, ist das Antriebsglied 120 bezüglich des Abtriebsgliedes 140 derart angeordnet, dass die erste Drehachse 150 bezüglich der zweiten Drehachse 152 einen Winkel κ von ca. 30 Grad einschliesst. Zwischen der zweiten Drehachse 152 und der vierten Drehachse 156 ist ein Winkel λ von ca. 60 Grad eingeschlossen. Der Winkel μ zwischen der ersten Drehachse 150 sowie der dritten Drehachse 154 beträgt 90 Grad. Somit ergibt sich für den zwischen der ersten Drehachse 150 und der vierten Drehachse 156 eingeschlossenen Winkel ein minimaler Wert ν von ungefähr 30 Grad.

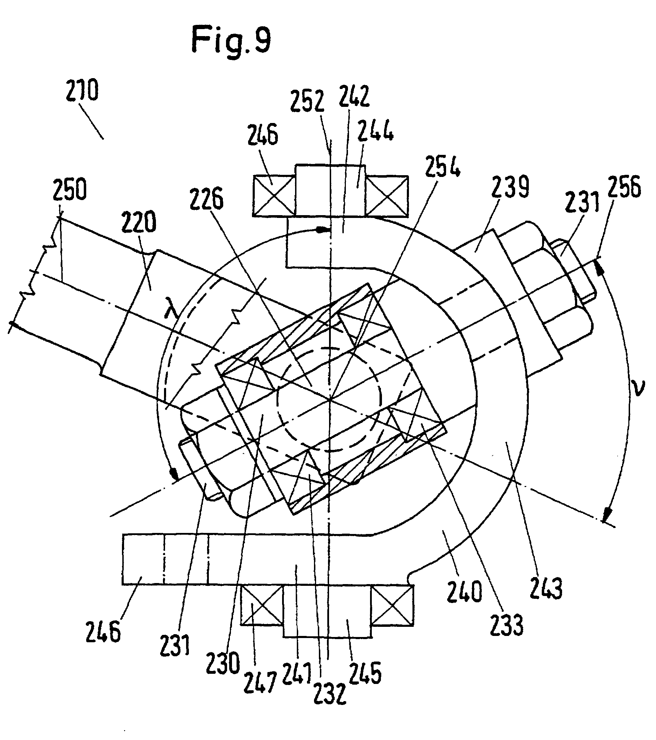

In Fig. 9 ist ein Lenkgetriebe 210 gemäss einer dritten bevorzugten Ausführungsform der Erfindung in einer vereinfachten, teilweise geschnittenen Seitenansicht analog der Darstellungen in den Figuren 1 und 7 dargestellt. Das in der Figur 9 dargestellte Lenkgetriebe 210 zeichnet sich durch einen wahlweise einstellbaren Winkel λ zwischen der zweiten Drehachse 252 und der vierten Drehachse 256 und somit ein wahlweise einstellbares Übersetzungsverhälthis aus.

Das in der Figur 9 dargestellte Lenkgetriebe 210 hat - ähnlich wie das in den Figuren 1 bis 3 dargestellte Lenkgetriebe 10 - ein um eine erste Drehachse 250 drehbares Antriebsglied 220, welches über ein Zwischenglied 230 mit einem um eine zweite Drehachse 252 drehbaren Abtriebsglied 240 gekuppelt ist. Das Antriebsglied 220 ist um eine dritte Drehachse 254 schwenkbar am Zwischenglied 230 angelenkt. Das Zwischenglied 230 ist seinerseits um eine vierte Drehachse 256 schwenkbar am Abtriebsglied 240 angelenkt.

Das gelenkseitige Ende des länglichen Antriebsgliedes 220 ist mit zwei Gabelholmen versehen. Die beiden Gabelholme sind je mit einer Bohrung und Lagern versehen, in welchen zwei Achszapfen 226 des im wesentlichen zwischen den beiden Gabelholmen angeordneten Zwischengliedes 230 aufgenommen werden, um das Antriebsglied 220 um die dritte Drehachse 254 schwenkbar am Zwischenglied 230 anzulenken.

Das Abtriebsglied 240 weist eine erste Schenkelpartie 241, eine zweite Schenkelpartie 242 sowie eine die beiden Schenkelpartien 241, 242 verbindende, in der Seitenansicht der Figur 9 im wesentlichen halbkreisförmige Stegpartie 243 auf. An den beiden Schenkelpartien 241, 242 ist je ein Achszapfen 244, 245 angeordnet. Diese Achszapfen 244. 245 passen in Lager 246. 247, um das Abtriebsglied 240 um die zweite Drehachse 252 drehbar zu lagern, wobei diese Lager 246, 247 in entsprechenden Lagerbuchsen am Chassis eines Fahrzeuges angebracht sein können, welches mittels des Lenkgetriebes 210 gelenkt wird. Die erste Schenkelpartie241 weist eine vor der Stegpartie 143 über die zweite Drehachse 252 hinaus reichende Verlängerung 246 auf, welche zur Betätigung des Lenkgestänges der das Lenkgetriebe 210 umfassenden Lenkung dient.

Die Stegpartie 243 wird durch eine im wesentlichen halbzylindrische Wand 243 gebildet, wobei die Wand 243 derart angeordnet ist, daß die Zylinderachse durch den Schnittpunkt der vier Drehachsen 250, 252, 254, 256 hindurch verläuft. In der zylindrischen Wand ist ein dem Umfang entlang verlaufender Schlitz derart ausgebildet, dass die durch den kreisbogenförmigen Schlitz definierte Ebene durch den Schnittpunkt der vier Drehachser 250, 252, 254, 256 hindurch verläuft. Im Schlitz ist mittels eines Befestigungsflansches 239 wahlweise lösbar und wieder arretierbar ein Achszapfen 231 derart befestigt, dass er wiederum durch den Schnittpunkt der vier Drehachsen 250, 252. 254, 256 hindurch verläuft. Der in Bezug auf die zylindrische Wand 243 stets radial anzuordnende Achszapfen 231 kann somit an beliebigen Positionen entlang des Schlitzes an der zylindrischen Wand 243 angebracht werden, wobei die durch den Achszapfen 231 definierte vierte Drehachse 256 stets durch den gemeinsamen Schnittpunkt der vier Drehachsen 250, 252, 254, 256 hindurch verläuft. Dadurch wird die wahlweise Einstellung des Winkels λ zwischen der zweiten Drehachse 252 und der vierten Drehachse 256 und somit des Übersetzungsverhältnisses des Lenkgetriebes 210 ermöglicht.

Mittels Kegelrollenlagern 232, 233 ist das mit einer zentralen, dem Achszapfen 231 entsprechenden Bohrung versehene Zwischenglied 230 um die vierte Drehachse 256 drehbar auf dem Achszapfen 231 gelagert.

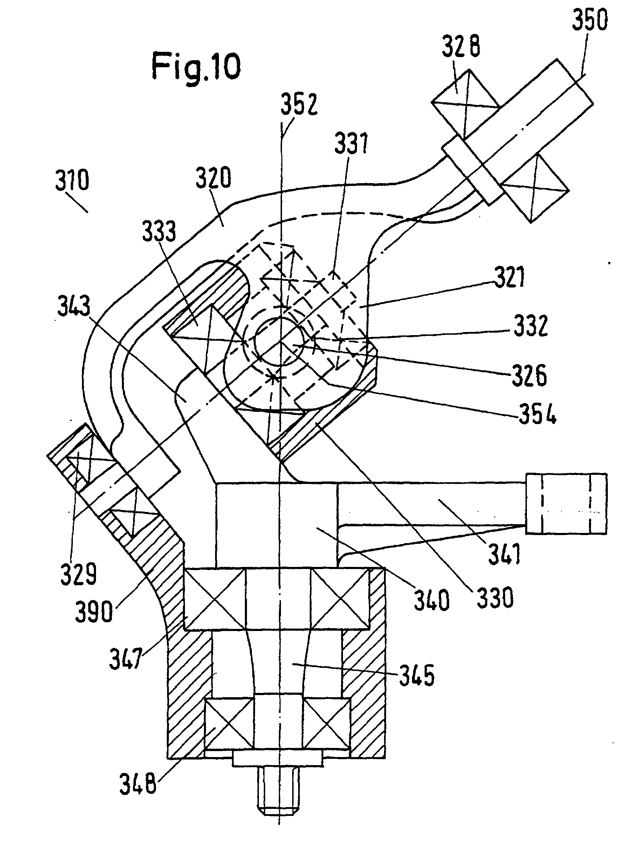

In Fig. 10 ist ein Lenkgetriebe 310 gemäss einer vierten bevorzugten Ausführungsform der Erfindung in einer vereinfachten, teilweise geschnittenen Seitenansicht analog der Darstellungen in den Figuren 1 und 9 dargestellt. Das in der Figur 10 dargestellte Lenkgetriebe 310 zeichnet sich durch eine Lagerung des Länglichen Antriebsgliedes 320 auf beiden Seiten ausserhalb des Zwischengliedes 330 aus.

Das in der Figur 10 dargestellte Lenkgetriebe 310 hat - ähnlich wie das in den Figuren 1 bis 3 dargestellte Lenkgetriebe 10 - ein um eine erste Drehachse 350 drehbares Antriebsglied 320, welches über ein Zwischenglied 330 mit einem um eine zweite Drehachse 352 drehbaren Abtriebsglied 340 gekuppelt ist. Das Antriebsglied 320 ist um eine dritte Drehachse 354 schwenkbar am Zwischenglied 330 angelenkt. Das Zwischenglied 330 ist seinerseits um eine vierte Drehachse 356 schwenkbar am Abtriebsglied 340 angelenkt.

Im Bereich des Zwischengliedes 330 ist das Antriebsglied 320 bogenförmig ausgebildet, wobei das Zwischenglied 330 im wesentlichen innerhalb des vom bogenförmigen Abschnitt des Antriebsgliedes 320 umfassten Bereich angeordnet ist. Auf beiden Seiten des Zwischengliedes ist das Antriebsglied 320 in Lagern 328. 329 um die erste Drehachse 350 drehbar gelagert. Die Lagerbuchsen der Lager 328, 329 sind in entsprechenden Lagerbuchsen an einem Teil 390 des Chassis eines Fahrzeuges angebracht, welches mittels des Lenkgetriebes 310 gelenkt wird.

Der bogenförmige Abschnitt des länglichen Antriebsgliedes 320 ist mit zwei lappenförmigen Vorsprüngen 321 versehen. Die beiden Lappen 321 sind je mit einer Bohrung und Lagern versehen, in welchen zwei Achszapfen 326 des im wesentlichen zwischen den beiden Lappen angeordneten Zwischengliedes 330 aufgenommen werden, um das Antriebsglied 320 um die dritte Drehachse 354 schwenkbar am Zwischenglied 330 anzulenken.

Das Abtriebsglied 340 ist winkelförmig ausgebildet und weist eine erste Schenkelpartie 341 und eine zweite Schenkelpart e 343 auf. An der zweiten Schenkelpartie 343 ist ein Achszapfen 331 angeformt. Mittels Kegelrollenlagern 332, 333 ist das mit einer zentralen, dem Achszapfen 331 entsprechenden Bohrung versehene Zwischenglied 330 um die vierte, durch den Achszapfen 331 definierte Drehachse drehbar auf dem Achszapfen 331 gelagert.

An der ersten Schenkelpartie 341 des Abtriebsgliedes 340 ist ein Achszapfen 345 angeordnet. Dieser Achs-

# EP 0 915 003 B1

zapfen 345 passt in Lager 347, 348, um das Abtriebsglied 340 um die zweite Drehachse 352 drehbar zu lagern, wobei diese Lager 347, 348 in entsprechenden Lagerbuchsen am Teil 390 des Chassis des Fahrzeuges angebracht sind, welches mittels des Lenkgetriebes 310 gelenkt wird. Die erste Schenkelpartie 341 ist vom Verbindungswinkel mit der zweiten Schenkelpartie 343 über die zweite Drehachse 352 hinaus verlängert, um zur Betätigung des Lenkgestänges der das Lenkgetriebe 110 umfassenden Lenkung zu dienen.

Zusammenfassend ist festzustellen, dass durch die Erfindung eine Fahrzeuglenkung mit variablem Übersetzungsverhältnis und ein Lenkgetriebe für eine solche Lenkung bereit gestellt werden, wobei das Lenkgetriebe im wesentlichen bloss aus einem Antriebsglied, einem Zwischenglied und einem Abtriebsglied besteht sowie aus Gelenkmitteln zur schwenkbaren Anlenkung des Antriebsgliedes am Zwischenglied und des Zwischengliedes am Abtriebsglied. Das erfindungsgemässe Lenkgetriebe weist somit eine äusserst einfache Konstrukt on auf. Bei Verwendung geeigneter Gelenkmittel ist das erfindungsgemässe Lenkgetriebe über den gesamten Lenkbereich im wesentlichen spielfrei einstellbar, und sie ermöglicht die Erreichung eines für Fahrzeuglenkungen ausreichenden Übersetzungsverhältnisses.

## Patentansprüche

1. Fahrzeuglenkung mit variablem Übersetzungsverhältnis, mit einem Lenkgetriebe (10; 110; 210; 310), das ein um eine erste Drehachse (50: 150; 250: 350) drehbares Antriebsglied (2C: 120: 220; 320) aufweist, welches über ein Zwischenglied (30; 130; 230; 330) mit einem um eine zweite Drehachse (52; 152: 252: 352) drehbaren Abtriebsglied (40: 140: 240; 340) gekuppelt ist, wobei das Antriebsglied (20; 120; 220; 320) um eine dritte Drehachse (54; 154; 254; 354) schwenkbar am Zwischenglied (30; 130; 230: 330) und dieses um eine vierte Drehachse (56; 156; 256; 356) schwenkbar am Abtriebsglied (40; 140; 240; 340) angelenkt ist, mit einer Anordnung der vier Drehachsen derart dass sich die vier Drehachsen in einem einzigen Punkt schneiden, **dadurch gekennzeichnet, daß** der zwischen der ersten Drehachse (50; 150; 250: 350) und der vierten Drehachse (56, 156; 256; 356) eingeschlossene minimale Winkel ($\nu$) in einem Bereich von 0.1 Grad bis 40 Grad liegt.

2. Fahrzeuglenkung nach Anspruch 1, **dadurch gekennzeichnet, dass** das Antriebsglied (20; 320) bezüglich des Abtriebsgliedes (40; 340) derart angeordnet ist. dass der zwischen der ersten Drehachse (50: 350) und der zweiten Drehachse (52; 352) eingeschlossene Winkel ($\kappa$) in einem Bereich zwischen 50 Grad und 89.9 Grad liegt.

3. Fahrzeuglenkung nach einem der Ansprüche 1 oder 2, **dadurch gekennzeichnet. dass** sie zur Betätigung der Lenkung weiter ein Lenkrad (70) umfasst, welches zur Begrenzung der Drehbewegungen des Lenkrades (70) mit Drehwinkel-Begrenzungsmitteln (74, 76, 78) versehen ist.

4. Lenkgetriebe (10; 110; 210; 310) für Fahrzeuglenkung nach einem der Ansprüche 1 bis 3, mit einem um eine erste Drehachse (50; 150; 250; 350) drehbaren Antriebsglied (20; 120; 220; 320), welches über ein Zwischenglied (30 130; 230: 330) mit einem um eine zweite Drehachse (52; 152; 252: 352) drehbaren Abtriebsglied (40: 140: 240: 340) gekuppelt ist, wobei das Antriebsglied (20; 120; 220; 320) um eine dritte Drehachse (54; 154; 254; 354) schwenkbar am Zwischenglied (30; 130; 230: 330) und dieses um eine vierte Drehachse (56; 156; 256; 356) schwenkbar am Abtriebsglied (40; 140: 240; 340) angelenkt ist, wobei die vier Drehachsen derart anzuordnen sind, dass sich die vier Drehachsen in einem einzigen Punkt schneiden, **dadurch gekennzeichnet, daß** der zwischen der ersten Drehachse (50; 150; 250; 350) und der vierten Drehachse (56; 156; 256: 356) eingeschlossene minimale Winkel ($\nu$) in einem Bereich von 0.1 Grad bis 40 Grad liegt.

5. Lenkgetriebe (10; 110; 210; 310) nach Anspruch 4, **dadurch gekennzeichnet, dass** das Zwischenglied (30; 130, 230; 330) bezüglich des Abtriebsgliedes (40: 140: 240; 340) derart angeordnet ist, dass die vierte Drehachse (56. 156: 256: 356) bezüglich der zweiten Drehachse (52; 152; 252; 352) einen Winkel ($\lambda$) im Bereich von 25 Grad bis 85 Grad einschliesst.

6. Lenkgetriebe (210) nach Anspruch 4 oder 5, **gekennzeichnet durch** Mittel (239, 243) zur wahlweisen Einstellung des zwischen der vierten Drehachse (256) und der zweiten Drehachse (252) eingeschlossenen Winkels ($\lambda$).

7. Lenkgetriebe (10) nach einem der Ansprüche 4 bis 6, **dadurch gekennzeichnet, dass** das Antriebsglied (20) eine gabelförmige Partie mit zwei Gabelholmen (21, 22) umfasst und die beiden Gabelholme (21, 22) je mit ersten Gelenkmitteln (23, 24, 25, 26, 27, 28) zur schwenkbaren Anlenkung der Gabelholme (21, 22) am Zwischenglied (30) versehen sind.

8. Lenkgetriebe (10) nach einem der Ansprüche 4 bis 7, **dadurch gekennzeichnet, dass** zur schwenkbaren Anlenkung des Zwischengliedes (30) am Abtriebsglied (40) ein Achszapfen (31) einseitig fest an einem der beiden Teile eines Teilepaares bestehend aus dem Zwischenglied (30) und dem Abtriebsglied (40) angeordnet ist und das andere der beiden Teile dieses Teilepaares mittels Lagermitteln (32, 33) drehbar auf dem Achszapfen (31) gelagert ist.

9. Lenkgetriebe (10) nach Anspruch 8, **dadurch gekennzeichnet, dass** der Achszapfen (31) einen kegelförmigen Abschnitt (34) aufweist, die Lagermittel (32, 33) ein oder mehrere Kegelrollenlager (32, 33) umfassen und das auf dem Achszapfen (31) gelagerte Teil (30) mittels axial verschieblichen Festhaltemitteln (36) in seiner axialen Position arretierbar ist, wobei mittels axialer Verschiebung der Festhaltemittel (36) das Spiel der Lagermittel (32, 33) einstellbar ist.

10. Lenkgetriebe (10) nach Anspruch 8 oder 9, **dadurch gekennzeichnet, dass** das Abtriebsglied (40) eine erste Schenkelpartie (41), eine zweite Schenkelpartie (42) sowie eine die beiden Schenkelpartien (41, 42) verbindende Stegpartie (43) aufweist, wobei der Achszapfen (31) einseitig fest an der Stegpartie (43) angeordnet ist und die beiden Schenkelpartien (41, 42) je mit dritten Gelenkmitteln (44, 45) zur um die zweite Drehachse (52) drehbaren Lagerung des Abtriebsgliedes (40) versehen sind.

## Claims

1. Motor vehicle steering device with variable transmission ratio, having a steering gear (10; 110; 210; 310) comprising a driving member (20; 120; 220; 320) which is rotatable about a first axis of rotation (50; 150; 250; 350) and is coupled via an intermediate member (30; 130; 230; 330) to a driven member (40; 140; 240; 340) which is rotatable about a second axis of rotation (52; 152; 252; 352), the driving member (20; 120; 220; 320) being pivotally articulated about a third axis of rotation (54; 154; 254; 354) with the intermediate member (30; 130; 230; 330), and the intermediate member (30; 130; 230; 330) being pivotally articulated about a fourth axis of rotation (56; 156; 256; 356) with the driven member (40; 140; 240; 340), with an arrangement of the four axes of rotation such that the four axes of rotation intersect at a single point, **characterised in that** the minimum angle ($\nu$) enclosed between the first axis of rotation (50; 150; 250; 350) and the fourth axis of rotation (56; 156; 256; 356) is within a range of from 0.1 degree to 40 degrees.

2. Motor vehicle steering device according to claim 1, **characterised in that** the driving member (20; 320) is so arranged with respect to the driven member (40; 340) that the angle ($\kappa$) enclosed between the first axis of rotation (50; 350) and the second axis of rotation (52; 352) is within a range of from 50 degrees to 89.9 degrees.

3. Motor vehicle steering device according to claim 1 or 2, **characterised in that** it further comprises a steering wheel (70) for operating the steering device, which steering wheel (70), for the purposes of limiting the rotary movements of the steering wheel (70), is provided with means (74, 76, 78) for limiting the angle of rotation.

4. Steering gear (10; 110; 210; 310) for a motor vehicle steering device according to any one of claims 1 to 3, having a driving member (20; 120; 220; 320) which is rotatable about a first axis of rotation (50; 150; 250; 350) and is coupled via an intermediate member (30; 130; 230; 330) to a driven member (40; 140; 240; 340) which is rotatable about a second axis of rotation (52; 152; 252; 352), the driving member (20; 120; 220; 320) being pivotally articulated about a third axis of rotation (54; 154; 254; 354) with the intermediate member (30; 130; 230; 330), and the intermediate member (30; 130; 230; 330) being pivotally articulated about a fourth axis of rotation (56; 156; 256; 356) with the driven member (40; 140; 240; 340), wherein the four axes of rotation are to be so arranged that the four axes of rotation intersect at a single point, **characterised in that** the minimum angle ($\nu$) enclosed between the first axis of rotation (50; 150; 250; 350) and the fourth axis of rotation (56; 156; 256; 356) is within a range of from 0.1 degree to 40 degrees.

5. Steering gear (10, 110; 210; 310) according to claim 4, **characterised in that** the intermediate member (30; 130; 230; 330) is so arranged with respect to the driven member (40; 140; 240; 340) that the fourth axis of rotation (56; 156; 256; 356) encloses an angle ($\lambda$) in the range of from 25 degrees to 85 degrees with respect to the second axis of rotation (52; 152; 252; 352).

6. Steering gear (210) according to claim 4 or 5, **characterised by** means (239, 243) for adjusting the angle ($\lambda$) enclosed between the fourth axis of rotation (256) and the second axis of rotation (252), if desired.

7. Steering gear (10) according to any one of claims 4 to 6, **characterised in that** the driving member (20) comprises a forked section having two tines (21, 22), and the two tines (21, 22) are each provided with first articulation means (23, 24, 25, 26, 27, 28) for the pivotable articulation of the tines (21, 22) with the intermediate member (30).

8. Steering gear (10) according to any one of claims 4 to 7, **characterised in that**, for the pivotable articulation of the intermediate member (30) with the driven member (40), a journal (31) is fixedly arranged on one side of one of the two members of a pair of members consisting of the intermediate member (30) and the driven member (40), and the other of the two members of that pair of members is rotatably mounted on the journal (31) by means of bearing means.

9. Steering gear (10) according to claim 8, **characterised in that** the journal (31) has a conical portion (34), the bearing means (32, 33) comprise one or more tapered roller bearings (32, 33), and the member (30) mounted on the journal (31) can be locked in its axial position by means of axially displaceable holding means (36), the play of the bearing means (32, 33) being adjustable by means of axial displacement of the holding means (36).

10. Steering gear (10) according to claim 8 or 9, **characterised in that** the driven member (40) has a first limb section (41), a second limb section (42) and a web section (43) connecting the two limb sections (41, 42), the journal (31) being fixedly arranged on one side of the web section (43), and the two limb sections (41, 42) each being provided with third articulation means (44, 45) for the rotatable mounting of the driven member (40) about the second axis of rotation (52).

**Revendications**

1. Direction pour véhicule, présentant un rapport de démultiplication variable, comportant un mécanisme de direction (10 ; 110 ; 210 ; 310) qui comprend un organe menant (20 ; 120 ; 220 ; 320) mobile en rotation autour d'un premier axe de rotation (50 ; 150 ; 250 ; 350), qui est accouplé via un organe intermédiaire (30 ; 130 ; 230 ; 330) à un organe mené (40 ; 140 ; 240 ; 340) mobile en rotation autour d'un deuxième axe de rotation (52 ; 152 ; 252 ; 352), dans laquelle l'organe menant (20 ; 120 ; 220 ; 320) est articulé en basculement sur l'organe intermédiaire (30 ; 130 ; 230 ; 33) autour d'un troisième axe de rotation (54 ; 154 ; 254 ; 354) et ledit organe intermédiaire est articulé en basculement sur l'organe mené (40 ; 140 ; 240 ; 340) autour d'un quatrième axe de rotation (56 ; 156 ; 256 ; 356), comportant un agencement des quatre axes de rotation tel que les quatre axes de rotation se recoupent en un point unique, **caractérisée en ce que** l'angle minimal (v) enfermé entre le premier axe de rotation (50 ; 150 ; 250 ; 350) et le quatrième axe de rotation (56 ; 156 ; 256 ; 356) est de l'ordre de 0,1° à 40°.

2. Direction pour véhicule selon la revendication 1, **caractérisée en ce que** l'organe menant (20 ; 320) est ainsi agencé par rapport à l'organe mené (40 ; 340) que l'angle (K) enfermé entre le premier axe de rotation (50 ; 350) et le deuxième axe de rotation (52 ; 352) est de l'ordre de 50° à 89,9°.

3. Direction pour véhicule selon l'une ou l'autre des revendications 1 et 2, **caractérisée en ce que** pour l'actionnement de la direction, elle comprend en outre un volant (70) qui est pourvu d'organes de délimitation d'angle de rotation (74, 76, 78) pour délimiter les mouvements de rotation du volant (70).

4. Mécanisme de direction (10; 110 ; 210 ; 310) pour une direction de véhicule selon l'une quelconque des revendications 1 à 3, comprenant un organe menant (20 ; 120 ; 220 ; 320) mobile en rotation autour d'un premier axe de rotation (50 ; 150 ; 250 ; 350), qui est accouplé via un organe intermédiaire (30 ; 130 ; 230 ; 330) à un organe mené (40 ; 140 ; 240 ; 340) mobile en rotation autour d'un deuxième axe de rotation (52 ; 152 ; 252 ; 352), dans lequel l'organe menant (20 ; 120 ; 220 ; 320) est articulé en basculement sur l'organe intermédiaire (30 ; 130 ; 230 ; 33) autour d'un troisième axe de rotation (54 ; 154 ; 254 ; 354) et ledit organe intermédiaire est articulé en basculement sur l'organe mené (40 ; 140 ; 240 ; 340) autour d'un quatrième axe de rotation (56 ; 156 ; 256 ; 356), ces quatre axes de rotation devant être agencés de telle sorte que les quatre axes de rotation se recoupent en un point unique, **caractérisé en ce que** l'angle minimal (v) enfermé entre le premier axe de rotation (50 ; 150 ; 250 ; 350) et le quatrième axe de rotation (56 ; 156 ; 256 ; 356) est de l'ordre de 0,1° à 40°

5. Mécanisme de direction (10 ; 110 ; 210 ; 310) selon la revendication 4, **caractérisé en ce que** l'organe intermédiaire (30 ; 130 ; 230 ; 330) est ainsi agencé par rapport à l'organe mené (40 ; 140 ; 240 ; 420) que le quatrième axe de rotation (56 ; 156 ; 256 ; 356) enferme un angle (λ) avec le deuxième axe de rotation (52 ; 152 ; 252 ; 352) qui est de l'ordre de 25° à 85°.

6. Mécanisme de direction (210) selon l'une ou l'autre des revendications 4 et 5, **caractérisé par** des moyens (239 ; 243) pour le réglage sélectif de l'angle ($\lambda$) entre le quatrième axe de rotation (256) et le deuxième axe de rotation (252).

7. Mécanisme de direction (10) selon l'une quelconque des revendications 4 à 6, **caractérisé en ce que** l'organe menant (20) comprend une partie en forme de fourche à deux bras (21, 22), et les deux bras (21, 22) sont pourvus chacun de premiers moyens d'articulation (23, 24, 25, 26, 27, 28) pour l'articulation en basculement des bras (21, 22) sur l'organe intermédiaire (30).

8. Mécanisme de direction (10) selon l'une quelconque des revendications 4 à 7, **caractérisé en ce que** pour l'articulation en basculement de l'organe intermédiaire (30) sur l'organe mené (40), un tourillon d'axe (31) est monté sur un côté fermement sur l'une des deux parties d'une paire de parties constituée par l'organe intermédiaire (30) et par l'organe mené (40), et l'autre des deux parties de cette paire de parties est montée en rotation sur le tourillon d'axe (31) via des moyens de montage (32, 33).

9. Mécanisme de direction (10) selon la revendication 8, **caractérisé en ce que** le tourillon d'axe (31) comprend un tronçon conique (34), les moyens de montage (32, 33) comprennent un ou plusieurs paliers à rouleaux coniques (32, 33), et la partie (30) montée sur le tourillon d'axe (31) peut être arrêtée dans sa position axiale via des moyens de retenue (36) axialement mobiles, le jeu des moyens de montage (32, 33) pouvant être réglé par translation axiale des moyens de retenue (36).

10. Mécanisme de direction (10) selon l'une ou l'autre des revendications 8 et 9, **caractérisé en ce que** l'organe mené (40) comprend une première partie de branche (41), une deuxième partie de branche (42) ainsi qu'une partie d'âme (43) reliant les deux parties de branche (41, 42), le tourillon d'axe (31) étant agencé sur un côté fermement sur la partie d'âme (43) et les deux parties de branche (41, 42) étant pourvues chacune de troisièmes moyens d'articulation (44, 45) pour le montage de l'organe mené (40) en rotation autour du deuxième axe de rotation (52).

# Fig.1

# Fig.2

# Fig.3

Fig.4

70

73

72

A --·- ·--·- A

80

84

82

87    86

85

88    10

88    81    89

Fig.5

78    70

76    74

# Fig.6

Fig.7

# Fig.8

# Fig.9

# Fig.10